# EUROPÄISCHE PATENTSCHRIFT

(11) **EP 1 197 678 B1**
(45) Veröffentlichungstag und Bekanntmachung des Hinweises auf die Patenterteilung: **05.07.2006**
(21) Anmeldenummer: 01124099.1
(22) Anmeldetag: 10.10.2001
(51) Int. Cl.: F16F 15/14

(54) **Einstellbarer Tilger zur Reduzierung von Torsionsschwingungen**
Adjustable damper to reduce torsional vibrations
Amortisseur réglable pour réduire les vibrations torsionnelles

(30) Priorität: 14.10.2000 EP 00122520
(43) Veröffentlichungstag der Anmeldung: 17.04.2002
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- GB-A- 837 877
- US-A- 2 898 777
- US-A- 3 054 305
- US-A- 4 023 438
- US-A- 4 262 553

## Beschreibung

Die Erfindung betrifft einen neuartigen, Elastomerschichten aufweisenden Torsions-Schwingungstilger, dessen Torsions-Eigenfrequenz ohne größeren Aufwand durch Vorspannen der Elastomerschicht für unterschiedliche Erreger-Frequenzen eingestellt werden kann. Durch unterschiedlich vorgespannte Elastomerschichten werden Veränderung in der Steifigkeit erreicht. Somit können in optimaler Weise in einem System auftretenden Drehschwingungen verringert oder gar eliminiert werden. Die neuen Torsionstilger zeichnen sich durch eine von der Kreisform abweichende Anordnung der Elastomerschichten aus, wodurch ein durch Zusammenpressen bewirkter und in Bezug auf die erforderliche Dämpfungsfrequenz überraschend gut regulierbarer Druckverformungsanteil erzielt werden kann.

Torsions-Schwingungstilger werden heute in vielen Bereichen der Technik eingesetzt und sind in der Literatur umfassend beschrieben. Entsprechende Schwingungen treten häufig bei sich schnell rotierenden Achsen und Wellen in Motoren und Getrieben auf und können, wenn der erregenden Kraft nicht entgegengewirkt werden. Nach dem Stand der Technik wird ein Torsions-Schwingungstilger für eine bestimmte Tilgerfrequenz konstruiert und gebaut, welche wiederum durch die Drehschwingungs-Eigenschaften das zu dämpfende System gegeben ist. Der nicht-einstellbare Torsions-Schwingungstilger des Standes der Technik kann dann nur für die vorher gewählte Frequenz verwendet werden, oder aber es ist ein erheblicher Aufwand erforderlich, den an sich nichteinstellbaren Torsions-Schwingungstilger in der Weise umzubauen, dass er auch zu Dämpfung von anderen Frequenzen eingesetzt werden kann.

Aus dem Patent US 4,023, 438 ist ein einstellbarer Tilger auf Basis von Elastomerschichten bekannt, welcher zur Eliminierung oder Reduzierung von Torsionsschwingungen geeignet ist. Der Tilger umfasst scheibenförmige Elemente, die konisch zueinander angeordnet sind und welche die ebenfalls als Scheibe geformte Tilgermasse aufnehmen. Die Elemente umschließen die Achse oder Welle, deren Torsionsschwingungen vermindert werden sollen. Die Konusflächen der Scheibenelemente weisen darüber hinaus wellenförmige Strukturen auf, wobei der Konuswinkel, den die Scheiben zur Achse einnehmen, steil ist. Dieses Konstruktionsprinzip ermöglicht es, die zur Schwingungsdämpfung notwendigen Druck- und Schubspannungen aufzubauen, hat jedoch den Nachteil, dass man zu Erzielung einer brauchbaren insbesondere in radialer Richtung wirkende Vorspannung relativ hohe Kräfte auf die Spannungselemente ausüben muss.

Es bestand somit die Aufgabe, einen Torsions-Schwingungstilger bereitzustellen, der die beschriebenen Nachteile nicht aufweist. Insbesondere soll er in Bezug auf einen bestimmten Frequenzbereich individuell, leicht und exakt einstellbar sein, um so die Drehschwingungen einer speziellen Maschine unter ihren speziellen Betriebsbedingungen eliminieren oder zumindest stark reduzieren zu können.

Es wurde nun gefunden, dass Drehschwingungstilger zur Dämpfung von Torsionsschwingungen von Achsen oder Wellen besonders geeignet sind, welche im Prinzip aus einem Trägerteil und einer Schwung- oder Tilgermasse bestehen und mittels elastomerer Schichten miteinander verbunden sind, wobei die Verbindungsflächen eine im Querschnitt von der Kreisform abweichende Kontur aufweisen und die Elastomerschichten durch Spannvorrichtungen individuell versteift werden und auf das zu dämpfende System eingestellt werden können. Überraschenderweise wurde gefunden, dass durch die Abweichung von der Kreisform neben der zu erwartenden Schubverformung der vorgespannten Elastomerschicht eine erheblicher Beitrag an Druckverformung generiert werden kann, die es erst ermöglicht die torsionale Steifigkeit der Elastomerschicht mittels einfacher Vorspannvorrichtungen über einen großen zu dämpfenden Frequenzbereich individuell und genau einzustellen. Je nach Elastomerschichtdicke und -fläche lassen sich mit dem erfindungsgemäßen Tilger besonders gut Torsionsschwingungen im Bereich zwischen 1 bis 1000 Hz, vorzugsweise zwischen 200 bis 500 Hz, insbesondere zwischen 320 bis 450 Hz dämpfen. Aber auch Schwingungen über 200 Hz können mit dem erfindungsgemäßen Tilger angesprochen werden.

Der Einsatz des erfindungsgemäßen einstellbaren Torsions-Schwingungstilgers ist besonders bei ähnlichen Maschinen, welche jedoch innerhalb eines bestimmten Rahmens unterschiedliche Störfrequenzen aufweisen, vorteilhaft. Somit kann der erfindungsgemäße Torsions-Schwingungstilger an die unterschiedlichen Gegebenheiten der einzelnen Maschinen angepasst werden kann. Auch ist es möglich, bei der gleichen Maschine, deren Schwingungscharakteristika sich auf Grund von Abnutzungserscheinungen oder anderen Betriebsbedingungen geändert haben, durch leicht durchzuführendes Nachstellen der Steifigkeit des Tilgers wiederum optimale Dämpfung im Bezug auf die erregende Drehschwingung herzustellen. Ein weiterer Vorteil des einstellbaren Torsions-Schwingungstilgers ist der Einsatz in Maschinen deren Störfrequenzen im Entwicklungsstadium noch nicht festgestellt werden konnten. Darüber hinaus kann der einstellbare Torsions-Schwingungstilger an bereits montierten und im Einsatz befindlichen Maschinen mit störenden Frequenzen, bei denen die besagten Störfrequenzen im Vorfeld nicht bekannt waren oder nicht bestimmt werden konnten, schnell angepasst werden, wodurch Schwingungsprobleme im Nachhinein schnell und kostengünstig beseitigt werden können ohne dass erst größere Schäden auftreten.

Gegenstand der Erfindung ist somit ein einstellbarer Tilger auf Basis von Elastomerschichten, geeignet zur Eliminierung oder Reduzierung von Torsionsschwingungen, einer sich drehenden Achse, im wesentlichen bestehend aus (a) einer in Blickrichtung der Achse oder Welle gesehenen oberen Scheibe (2) und einer unteren Scheibe (3), die als Träger für eine Tilgermasse dienen, mit der sie mittels Elastomerschichten verbunden sind und jeweils eine innere, im Querschnitt rotationssymmetrische Aussparung aufweisen, welche die zu dämpfende, ebenfalls im Querschnitt gleichartig rotationssymmetrische, mit den Scheiben fest verbundene Achse oder Welle (10) passend aufzunehmen vermag, (b) einer, aus einem oder mehreren Teilen bestehenden äußeren, als Tilgermasse dienenden Scheibe (1), mit einer inneren entsprechend der Scheiben (2), (3) geformten nicht-kreisförmigen Aussparung, welche diese passend aufzunehmen vermag, (c) Elastomerschichten (4, 5), welche an den äußeren bzw. inneren Konturen bzw. Begrenzungsflächen besagter Scheiben angebracht sind und diese miteinander verbinden, und (d) Spannvorrichtungen(6), welche die Elastomerschichten zu pressen und damit zu versteifen vermögen, wobei mindestens eine der beiden Scheiben (2), (3) in Blickrichtung der Achse gesehen, eine im Querschnitt nicht-kreisförmige äußere Kontur aufweist und eine konische Form mit einem. Konuswinkel von 3° bis 45° gemessen zur Achse (10) besitzt.

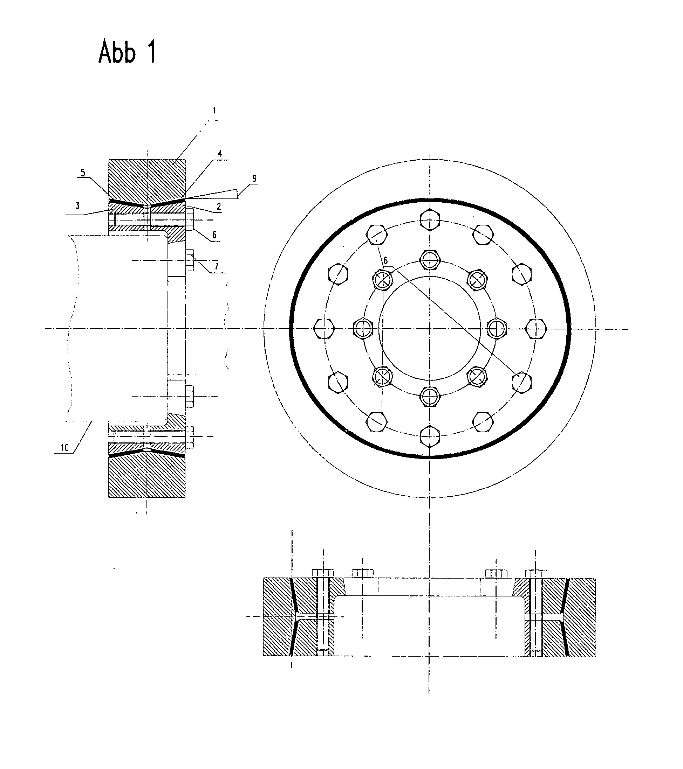

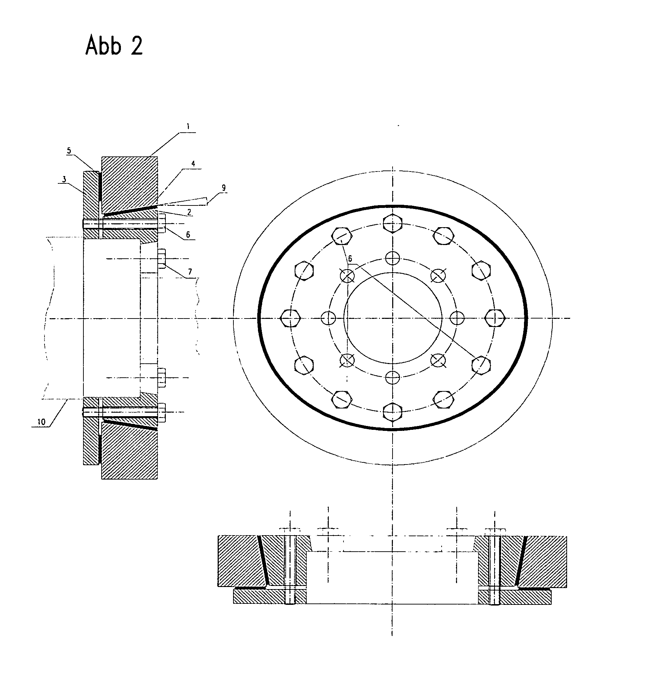

Die Tilgerträgerscheibe (2, 3 gemäß Abb. 1 und 2) bzw. mindestens einer ihrer Teile, welche an der zu dämpfenden Maschinenachse oder Getriebewelle befestigt ist und sich entsprechend mitdreht und somit Drehschwingungen aufnimmt, besitzt erfindungsgemäß eine äußere von der Kreisform abweichende Kontur bzw. Begrenzungsfläche. Eine solche nicht-kreisförmige Kontur kann sein eine ellipsoide Kontur eine quadratische oder rechteckige Struktur mit vorzugsweise stark abgerundeten Ecken, oder aber auch eine unregelmäßig geformte Kurvenkontur. Vorzugsweise haben die erfindungsgemäßen Tilger eine elliptische Kontur, bzw. Begrenzungsfläche.

Die Achse oder Welle (10) ist vorzugsweise von rundem Querschnitt. Somit ist auch die innere Aussparung bzw. Begrenzungsfläche der Tilgerscheibe (2, 3) bzw. (11) von kreisförmigen Querschnitt. Prinzipiell sind aber auch andere rotationssymmetrische Achsen oder Wellen und damit auch Scheibenaussparungen möglich.

Die Erfindung umfasst somit einen entsprechenden Tilger, bei dem die nicht-kreisförmige äußere Kontur der Scheiben (2), (3) eine Ellipse, eine quadratische oder rechteckige Struktur mit stark abgerundeten Ecken, oder eine unregelmäßig geformte Kurvenkontur ist.

Die Erfindung umfasst vorzugsweise einen entsprechenden Tilger, bei dem die rotationssymmetrische Aussparung der Scheiben (2), (3) bzw. die gleichartig rotationssymmetrische Achse oder Welle (10) einen kreisförmigen Querschnitt hat

In einer bevorzugten Ausführungsform besteht die innere Tilgerträgerscheibe aus zwei Teilen, bzw. Scheiben (2, 3), welche bezüglich der Achse (10) gesehen, über- bzw. untereinander angeordnet sind und durch eine Spannvorrichtung (6) unter Einwirkung der Elastomerschichten gegeneinander axial verspannt werden können (Abb. 1). Hierbei ist vorzugsweise die Scheibe (2) mit der Achse/Welle (10) fest verbunden. Die Scheiben können unterschiedlich dick sein und aus den verschiedenen Materialien bestehen, wie beispielsweise, Kunststoff, Carbonfaser, Metall oder Metalllegierung, wie Aluminium, Stahl, Eisen. Erfindungsgemäß hat zumindest eine der beide Scheiben (2) und (3) eine von der Kreisform abweichenden Kontur bzw. Form, vorzugsweise ist dies die obere Scheibe (2). Vorzugsweise weisen jedoch beide Scheiben (2) und (3) eine entsprechende Form auf (Abb.1).

Neben der von der Kreisform abweichenden Kontur bzw. Form hat zumindest einer der Scheiben der besagten Ausführungsform, vorzugsweise wieder die obere Scheibe (2), eine bezüglich der Achse (10) orientierte Konusform. In einer bevorzugten Variante haben beide Scheiben Konusform mit gleichem aber gegensätzlich geöffneten Konuswinkel, wodurch letztlich eine in der Seitensicht zu beobachtende V-Form der äußeren Begrenzungsflächen der Trägertilgerscheiben (2), (3) entsteht. Die V-Form, bzw. der sie bildende Winkel kann dabei in Richtung der Achse oder aber von ihr weg orientiert sein. Der Konuswinkel liegt in dieser Ausführungsform zwischen 3 und 45°, vorzugsweise zwischen 3 und 25°, insbesondere aber zwischen 5 und 15°. Generell können die Konuswinkel der Scheiben (2) und (3) auch unterschiedlich sein. Die Scheiben (2, 3) stellen in dieser Ausführungsform also Kegelsegmente dar, die eine gemeinsame Kegelbasisfläche besitzen.

Die Erfindung umfasst somit einen einstellbaren Tilger, bei dem die Trägerscheibe aus einem inneren Scheibenpaar zusammengesetzt ist, welches aus einer in Blickrichtung der Achse oder Welle (10) gesehenen unteren (3) und einer oberen (2) Scheibe besteht, und besagte Scheiben (2, 3) mittels der Spannmittel (6) unter Versteifung der Elastomerschichten (4) (5) gegeneinander axial verspannt werden können, wobei mindestens eine Scheibe eine nicht-kreisförmige äußere Kontur aufweist sowie bezüglich der Achse oder Welle (10) konisch geformt ist.

In weiteren bevorzugten Ausführungsform sind die Spannvorrichtungen (6) also axial angeordnet, und die beide Scheiben, (2), (3) weisen eine nicht-kreisförmige äußere Kontur auf und sind jeweils konisch in der Weise geformt, dass sie eine V-Form bilden mit einem Konuswinkel von 3 - 45° gemessen zur Achse (10).

Die Erfindung umfasst einen entsprechenden Tilger, welcher Konuswinkel der besagten Scheiben (2, 3) zwischen vorzugsweise jeweils 3° bis 45°, vorzugsweise 3 bis 25°, insbesondere 5 bis 20° aufweist.

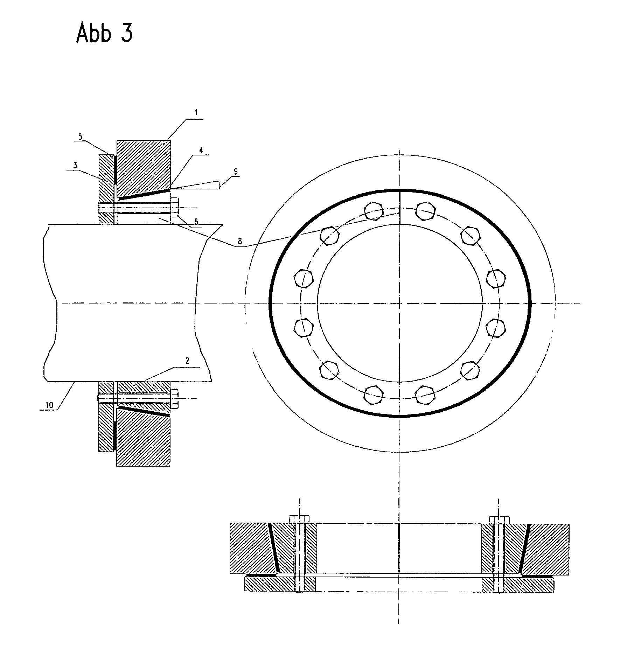

In einer weiteren vereinfachten Ausführungsform (Abb. 2, 3) besitzt, beispielsweise nur die obere Scheibe (2) des Scheibenpaars (2, 3), eine Konusform sowie eine von der Kreisform abweichende, vorzugsweise elliptische Kontur, wie oben beschrieben, wohingegen die untere Scheibe (3) keine der beiden entsprechenden Formgebungen besitzt, sondern lediglich eine einfache zylindrische Scheibe darstellt, die auf die Achse (10) aufgesteckt ist. Sie besitzt auf der Seite, die der konischen Scheibe (2) zugewandt ist, eine Elastomerschicht, welche in Kontakt mit der Tilgermasse (1) steht. Diese Elastomerschicht erfährt bei Vorspannung, da sie nunmehr keine 3 - 45° Neigung zur Achse (10)aufweist, sondern 90° zu ihr steht, im Gegensatz zu der oben beschriebenen Ausführungsform nahezu ausschließlich Schubverformung und kaum Druckverformung und trägt somit nicht wesentlich zur Kompensierung von Torsionsschwingungen bei.

Auf Grund seines einfacheren Aufbaus ist dieser Tilger aber kostengünstiger zu produzieren und ist für Systeme mit geringfügigeren torsionalen Schwingungsproblemen geeignet.

Die Erfindung umfasst somit einen Tilger, der in der Weise aufgebaut ist, dass nur eine der Scheiben (2, 3) eine nicht-kreisförmige äußere Kontur aufweist sowie bezüglich der Achse oder Welle (10) konisch geformt ist, wobei der Konuswinkel 3° bis 45°, vorzugsweise 3 bis 25° beträgt, und die andere Scheibe (3, 2) eine rein zylindrische Form hat und eine Elastomerschicht aufweist, deren Fläche somit senkrecht zur Achse (10) gemäß Abb. 2, 3 angeordnet ist.

Wie bereits mehrfach erwähnt, muss das innere Scheibenpaar (2, 3) an der Achse bzw. Welle (10) befestigt werden. Vorzugsweise ist dies die obere Scheibe (2), wobei die Befestigung mittels der üblichen im Stand der Technik bekannten Mittel bewerkstelligt werden kann. Vorzugsweise werden hierfür Verschraubungen verwendet (Abb. 1, 2), es sind aber auch Nieten oder Klammern oder dergleichen geeignet. Es kann aber auch ohne derartige Befestigungsmittel ausgekommen werden, wenn das Scheibenpaar, bzw. eines seiner Teile (2) (3) durch die gegenseitige Verspannung an der Welle festgeklemmt werden kann. Dies kann erfindungsgemäß durch einen Klemmschlitz (8) (Abb. 3) beispielsweise in der oberen Scheibe (2) ermöglicht werden.

Die Erfindung umfasst also auch einen entsprechenden Tilger, der Befestigungsmittel (7) oder einen oder mehrere selbstverspannende Klemmschlitze (8) aufweist, welche die feste Verbindung des Scheibe (2, 3) mit der zu dämpfenden Achse oder Welle (10) bewirken.

Im folgenden wird die Erfindung näher beschrieben:
Erläuterungen der Abbildungen:
   Abb. 1 Torsions-Schwingungstilger mit doppelt kegelförmigen Ellipsen
   Abb. 2 Torsions-Schwingungstilger mit einfach kegelförmigen Ellipse
   Abb. 3 Torsions-Schwingungstilger mit einfach kegelförmigen Ellipse und Wellen-Klemmverbindung

Erläuterungen der Bezugsgrößen:

| | |
|---|---|
| Pos1 | Schwungring |
| Pos 2 | Klemmring |
| Pos 3 | Gegenklemmring |
| Pos 4 | Elastomerschicht Klemmring |
| Pos 5 | Elastomerschicht Gegen - Klemmring |
| Pos 6 | Klemmverschraubung |
| Pos 7 | Befestigungsverschraubung |
| Pos 8 | Klemmschlitz für Wellenverspannung |
| Pos 9 | Konuswinkel |
| Pos 10 | Zu beruhigender Rotationskörper (Welle) |

Die Elastomerschichten (4, 5, 16) der erfindungsgemäßen Tilger bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 30 bis 80 Shore verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe.

Die zwischen Tilgerträger und Tilgermasse befindliche Elastomerschicht kann auch aus mehreren Schichten bestehen, die gegebenenfalls durch andere härtere Materialien, wie Platten oder Schichten aus Kunststoff oder Metall, voneinander getrennt und durch diese verstärkt werden. Somit lässt sich die Steifigkeit weiter beeinflussen und auf die Gegebenheiten des speziellen Systems einstellen.

Die Elastomerschichten werden mit den besagten Scheiben oder den oben genannten Zwischenschichten mittels im Stand der Technik an sich bekannter Maßnahmen und Mittel verbunden. In der Regel geschieht dies in vorteilhafter Weise durch Vulkanisierung. Aber auch Verkleben, Verklemmen Verschrauben oder dergleichen ist erfindungsgemäß durchführbar.

Zwei ineinander greifende Ellipsen mit zwischengelagerter Elastomerschicht stellen eine drehsteife Einheit dar. Die Steifigkeit ist abhängig von der Breite der elliptischen Bauteile, dem Abstand der beiden Ellipsenbrennpunkte und vom Durchmesser der Ellipsen sowie von der Dicke und der Steifigkeit (Shore-Härte) der zwischengelagerten Gummischicht.
Die Dicke der zwischengelagerten Gummischicht ist wie folgt einstellbar:
Die elliptischen Bauteile weisen gleichzeitig eine konische Form (Konuswinkel (9) 3° bis 25 °, vorzugsweise 8°bis 12°) auf. Die Torsionssteifigkeit der zwei ineinander greifenden Ellipsen (Klemmring (1) und Schwungring (2)) mit zwischengelagerter Elastomerschicht ist sehr stark von der Dicke der Elastomerschicht und deren Vorkomprimierung abhängig.
Durch das Zusammenziehen der Konen durch die Schrauben (6) wird der Abstand und somit die Elastomerschicht (4), (5) dünner und stärker vorkomprimiert. Somit ist die Steifigkeit über einen weiten Bereich einstellbar. Damit ist auch die von der Steifigkeit abhängige Tilgerfrequenz regulierbar. Die Steifigkeit kann auch durch verschiedene Schichtdicken voreingestellt werden.

Die Form kann, wie in Abb. 1-3 dargestellt, elliptisch sein, oder kann aber auch mehrere, der Ellipsenbäuche ähnliche Verdickungen am Umfang haben, welche die Steifigkeit grundsätzlich vergrößern. Weiterhin sind zwei konzentrische Kreise wie in den Abb. 4 und 5 dargestellt möglich Der Torsions-Schwingungstilger kann nach dem Stand der Technik axial - oder mit Spannelementen auf der Welle radial befestigt werden.

Der Torsions-Schwingungstilger kann auch wie in Abb. 3 gezeichnet, selbst als Spannelement ausgeführt werden.

### Ausführungsformen:

### Doppelt kegelige Ellipsen gemäß Abb. 1.

Es werden zwei Ellipsen gegeneinander verspannt. Ellipsen-Elastomerlager Pos. 4 und Gegen-Ellipsenelastomerlager Pos. 5 , spiegelbildlich zu Pos. 4. Diese Ausführungsform hat einen relativ hoher Fertigungsaufwand gegenüber den folgenden Beispielen.

### Einfach kegelige Ellipsen mit Gegenlager gemäß Abb. 2.

Gegen das Elliptische Lager wird ein flaches Elastomerlager Pos. 5 gespannt. Der Fertigungsaufwand ist geringer als bei Pos. 1. Gleichzeitig bringt die eine breitere Elastomerschicht größere Schubsteifigkeit als die zwei schmaleren konischen Schichten zusammen. Das flache Elastomerlager Pos. 5 trägt aber nur unwesentlich zur gewünschten Torsionssteifigkeit bei.

### Einfach- und doppelt kegelige Ellipsen und Wellen Klemmverbindung

Dieser Torsions-Schwingungstilger wird gleichzeitig durch die - für die Funktion des Torsions- Schwingungstilgers erforderliche- axiale Vorspannung auf der Welle befestigt. Dies erfolgt durch Aufschlitzen des Klemmringes Pos. 2 durch Klemmschlitz für die Wellenverspannung Pos. 8

Die Steifigkeit der erfindungsgemäßen Torsions-Schwingungstilger ist von folgenden Parametern abhängig:
- Abweichung von der Kreisform (Form bzw. Verhältnis der zwei Ellipsen achsen)
- Härte der Elastomerschicht (Shore-Härte)
- Tiefe der Elastomerschicht ( Breite des Torsions-Schwingungstilgers bzw. der eingebauten Elastomerschicht)
- Durchmesser des Torsions-Schwingungstilgers
- Dicke der Elastomerschicht

Die Tigerfrequenz ist abhängig von:
Torsionssteifigkeit
Schwungmasse (1)

Einstellbar ist die Vorspannung und damit gleichzeitig die unter der Vorspannung veränderte Dicke der Elastomerschicht. Daraus ergibt sich die Einstellbarkeit der Torsionssteifigkeit und damit die Torsionsfrequenz des Tilgers.

## Patentansprüche

1. Einstellbarer Tilger auf Basis von Elastomerschichten, geeignet zur Eliminierung oder Reduzierung von Torsionsschwingungen einer sich drehenden Achse, im wesentlichen bestehend aus
(a) einer in Blickrichtung der Achse oder Welle gesehenen oberen Scheibe (2) und einer unteren Scheibe (3), die als Träger für eine Tilgermasse dienen, mit der sie mittels Elastomerschichten verbunden sind und jeweils eine innere, im Querschnitt rotationssymmetrische Aussparung aufweisen, welche die zu dämpfende, ebenfalls im Querschnitt gleichartig rotationssymmetrische, mit den Scheiben fest verbundene Achse oder Welle (10) passend aufzunehmen vermag,
(b) einer, aus einem oder mehreren Teilen bestehenden äußeren, als Tilgermasse dienenden Scheibe (1), mit einer inneren entsprechend der Scheiben (2), (3) geformten nicht-kreisförmigen Aussparung, welche diese passend aufzunehmen vermag,
(c) Elastomerschichten (4, 5), welche an den äußeren bzw. inneren Konturen bzw. Begrenzungsflächen besagter Scheiben angebracht sind und diese miteinander verbinden, und
(d) Spannvorrichtungen (6), welche die Elastomerschichten zu pressen und damit zu versteifen vermögen,
**dadurch gekennzeichnet, dass**
mindestens eine der beiden Scheiben (2), (3) in Blickrichtung der Achse gesehen, eine im Querschnitt nicht-kreisförmige äußere Kontur aufweist und eine konische Form mit einem Konuswinkel von 3° bis 45° gemessen zur Achse (10) besitzt.

2. Einstellbarer Tilger nach Anspruch 1, **dadurch gekennzeichnet, dass** die nicht-kreisförmige äußere Kontur der Scheiben (2), (3) eine Ellipse, eine quadratische oder rechteckige Struktur mit stark abgerundeten Ecken, oder eine unregelmäßig geformte Kurvenkontur ist.

3. Einstellbarer Tilger nach Anspruch 1 oder 2, **dadurch gekennzeichnet, dass** die rotationssymmetrische Aussparung der Scheiben (2), (3) bzw. die gleichartig rotationssymmetrische Achse oder Welle (10) einen kreisförmigen Querschnitt hat.

4. Einstellbarer Tilger nach einem der Ansprüche 1 bis 3, **dadurch gekennzeichnet, dass** die Spannvorrichtungen (6) axial angeordnet sind.

5. Einstellbarer Tilger nach einem der Ansprüche 1 bis 4, **dadurch gekennzeichnet, dass** beide Scheiben (2), (3) eine nicht-kreisförmige äußere Kontur aufweisen und jeweils konisch in der Weise geformt sind, dass sie eine V-Form bilden und jeweils einen Konuswinkel von 3 - 45° aufweisen.

6. Einstellbarer Tilger nach einem der Ansprüche 1 bis 4, **dadurch gekennzeichnet, dass** nur eine Scheibe (2, 3) eine nicht-kreisförmige äußere Kontur aufweist und eine bezüglich der Achse oder Welle (10) konische Form mit einem Konuswinkel von 3 bis 45° aufweist, und die andere Scheibe (3, 2) eine rein zylindrische Form hat und der konischen Scheibe (2, 3) zugewandt ist sowie eine Elastomerschicht (5) aufweist, deren Fläche senkrecht zur Achse (10) angeordnet ist und in Kontakt mit der Tilgermasse (1) steht.

7. Einstellbarer Tilger nach einem der Ansprüche 1 - 6, **dadurch gekennzeichnet, dass** der Konuswinkel 3 - 25° beträgt.

8. Einstellbarer Tilger nach einem der Ansprüche 1 bis 7, **dadurch gekennzeichnet, dass** er Befestigungsmittel (7) oder einen oder mehrere selbst verspannenden Klemmschlitze (8) aufweist, welche die feste Verbindung der Scheiben (2), (3) mit der zu dämpfenden Achse oder Welle (10) bewirken.

## Claims

1. Adjustable absorber based on elastomer layers, suitable for eliminating or reducing torsional vibrations of a rotating axle, essentially consisting of
(a) an upper (regarded in the viewing direction of the axle or shaft) disc (2) and a lower disc (3), which serve as supports for an absorber material, to which they are connected by means of elastomer layers, and each of which has an internal opening which is rotationally symmetrical in cross section and is capable of accommodating with a good fit the axle or shaft (10) to be damped, which is likewise rotationally symmetrical in the same way in cross section and is firmly connected to the discs,
(b) an outer disc (1) consisting of one or more parts and serving as absorber material, having an internal non-circular opening, which is shaped corresponding to the discs (2), (3) and is capable of accommodating the latter with a good fit,
(c) elastomer layers (4, 5), which are installed on the outer or inner contours or limiting surfaces of the said discs and connect the latter to one another, and
(d) fixing devices (6), which are capable of compressing and thus stiffening the elastomer layers,
**characterized in that**
at least one of the two discs (2), (3), regarded in the viewing direction of the axle, has an outer contour which is non-circular in cross section and has a conical shape with a cone angle of 3° to 45° measured to the axle (10).

2. Adjustable absorber according to Claim 1, **characterized in that** the non-circular outer contour of the discs (2), (3) is an ellipse, a square or rectangular structure with highly rounded corners, or an irregularly shaped curve contour.

3. Adjustable absorber according to Claim 1 or 2, **characterized in that** the rotationally symmetrical opening of the discs (2), (3) or the axle or shaft (10) which is rotationally symmetrical in the same way has a circular cross section.

4. Adjustable absorber according to one of Claims 1 to 3, **characterized in that** the fixing devices (6) are arranged axially.

5. Adjustable absorber according to one of Claims 1 to 4, **characterized in that** the two discs (2), (3) have a non-circular outer contour and are each conically shaped in such a way that they form a V-shape and each have a cone angle of 3 - 45°.

6. Adjustable absorber according to one of Claims 1 to 4, **characterized in that** only one disc (2, 3) has a non-circular outer contour and has a conical shape with respect to the axle or shaft (10) with a cone angle of 3 to 45°, and the other disc (3, 2) has a purely cylindrical shape and faces the conical disc (2, 3) and has an elastomer layer (5) whose surface is arranged perpendicular to the axle (10) and is in contact with the absorber material (1).

7. Adjustable absorber according to one of Claims 1 - 6, **characterized in that** the cone angle is 3 - 25°.

8. Adjustable absorber according to one of Claims 1 to 7, **characterized in that** it has fixtures (7) or one or more self-tensioning clamping slots (8), which effect secure connection of the discs (2), (3) to the axle or shaft (10) to be damped.

## Revendications

1. Absorbeur réglable basé sur des couches en élastomère, convenant pour éliminer ou réduire des vibrations en torsion d'un axe tournant, constitué essentiellement par
(a) un disque supérieur (tel que vu suivant la direction de visualisation de l'axe ou arbre) (2) et par un disque inférieur (3), lesquels disques jouent le rôle de supports pour un matériau absorbeur, auquel ils sont connectés au moyen de couches en élastomère, et dont chacun présente une ouverture interne qui est symétrique en rotation en coupe transversale et qui permet de loger moyennant un bon ajustement l'axe ou arbre (10) destiné à être amorti, lequel est pareillement symétrique en rotation de la même façon en coupe transversale et est fermement connecté aux disques,
(b) un disque externe (1) étant constitué par une ou plusieurs parties et jouant le rôle de matériau absorbeur, présentant une ouverture non circulaire interne, qui est conformée en correspondance avec les disques (2), (3) et qui permet de loger ces derniers moyennant un bon ajustement,
(c) des couches en élastomère (4, 5) qui sont installées sur les contours externes ou internes ou sur les surfaces de limitation afférentes desdits disques et qui connectent ces derniers l'un à l'autre, et
(d) des dispositifs de fixation (6) qui permettent de comprimer et par conséquent de rigidifier les couches en élastomère,
**caractérisé en ce que**
au moins l'un des deux disques (2), (3), considéré suivant la direction de visualisation de l'axe, présente un contour externe qui est d'une section en coupe non circulaire et présente une forme conique moyennant un angle de cône de 3° à 45° mesuré par rapport à l'axe (10).

2. Absorbeur réglable selon la revendication 1, **caractérisé en ce que** le contour externe non circulaire des disques (2), (3) est une ellipse, une structure carrée ou rectangulaire avec des coins hautement arrondis ou un contour courbe de forme irrégulière.

3. Absorbeur réglable selon la revendication 1 ou 2, **caractérisé en ce que** la ouverture symétrique en rotation des disques (2), (3) ou de l'axe ou arbre (10) qui est symétrique en rotation de la même façon présente une section en coupe circulaire.

4. Absorbeur réglable selon l'une des revendications 1 à 3, **caractérisé en ce que** les dispositifs de fixation (6) sont agencés axialement.

5. Absorbeur réglable selon l'une des revendications 1 à 4, **caractérisé en ce que** les deux disques (2), (3) présentent un contour externe non circulaire et sont chacun conformés de façon conique de telle sorte qu'ils forment une forme en V et que chacun présente un angle de cône de 3-45°.

6. Absorbeur réglable selon l'une des revendications 1 à 4, **caractérisé en ce que** seulement un disque (2, 3) présente un contour externe non circulaire et présente une forme conique par rapport à l'axe ou arbre (10) moyennant un angle de cône de 3° à 45°, et l'autre disque (3, 2) présente une forme purement cylindrique et fait face au disque conique (2, 3) et comporte une couche en élastomère (5) dont une surface est agencée perpendiculairement à l'axe (10) et est en contact avec le matériau absorbeur (1).

7. Absorbeur réglable selon l'une des revendications 1 à 6, **caractérisé en ce que** l'angle de cône est de 3-25°.

8. Absorbeur réglable selon l'une des revendications 1 à 7, **caractérisé en ce qu'**il comporte des moyens de fixation (7) ou une ou plusieurs fentes de verrouillage en auto-tension (8), qui réalisent une connexion sûre des disques (2), (3) sur l'axe ou arbre (10) destiné à être amorti.
